# EUROPEAN PATENT APPLICATION

(11) **EP 2 037 368 A2**
(43) Date of publication of application: **18.03.2009**
(21) Application number: 08158811.3
(22) Date of filing: 23.06.2008
(51) Int. Cl.: G06F 11/36

(54) **Simulation of program execution to detect problem such as deadlock**

(30) Priority: 30.07.2007 JP 2007198001
(71) Applicant: Fujitsu Microelectronics Limited, Tokyo 163-0722 (JP)
(72) Inventor: Tatsuoka, Masato FUJITSU LIMITED, Kawasaki-shi Kanagawa 211-8588 (JP); Ike, Atsushi FUJITSU LIMITED, Kawasaki-shi Kanagawa 211-8588 (JP)
(74) Representative: Seeger, Wolfgang

(57) **Abstract**

A method of simulating software by use of a computer includes executing a program inclusive of a plurality of threads by a hardware model implemented as software on a software simulator, utilizing a monitor function of the simulator to collect information about accesses by monitoring accesses made by the plurality of threads with respect to resources provided in the hardware model, utilizing the monitor function to detect, from the collected information, overlapping accesses made to an identical resource area by two or more of the threads, and utilizing the monitor function to generate a message for warning of the overlapping accesses.

## Description

### BACKGROUND OF THE INVENTION

### 1. Field of the Invention

The disclosures herein generally relate to computer-aided design, and particularly relate to the detection of problems such as a deadlock occurring during the execution of programs on a system LSI.

### 2. Description of the Related Art

In developing a parallel program that runs on a single-processor or multi-processor system, there is a need to accurately detect the occurrence of datarace and deadlock. Based on the detected dataraces and deadlocks, the software engineer modifies the program to remove the causes of such occurrences.

Datarace refers to an error that occurs as a result of multiple accesses to a single variable due to the failure to perform proper exclusive access control. While a thread is accessing an addressable memory location during program execution, another thread may modify the content of this memory location. In such a case, this program contains a datarace.

Deadlock refers to an error in which two threads hold resources required by each other so as to wait for the release of resources, for example, resulting in a processing halt due to the failure of either thread to release its resource. More specifically, under the condition in which a plurality of processes are active, a process A may exclusively use a record "c", and another process B may exclusively use another record "e". If the process A needs to use the record "e" currently used by the process B, the process A is placed in a waiting state until the record "e" is released. If the process B needs to use the record "c" currently used by the process A, the process B is placed in a waiting state until the record "c" is released. Accordingly, both the process A and the process B are in the waiting state, resulting in a processing halt.

In the above description, datarace and deadlock have been described as conflict between two processes for the sake of simplicity of explanation. In actual processing, however, datarace and deadlock may also occur between more than two processes. Regardless of the number of processes, datarace and deadlock often cause a system operation failure, causing a significant drop in system performance.

In order to detect datarace and deadlock, it is conceivable to use a real system-LSI device to execute software and to debug this software. In this case, debug functions are embedded in the real system-LSI device. The execution of a program is made to stop at breakpoints specified in the program, followed by checking the contents of register stacks, the values of global data, the contents of program call stacks, and so on. When the objects to be debugged are multi-threads, provision may preferably be made such that when a thread stops its execution upon reaching a breakpoint, other threads also stop their execution. The provision of such debug functions embedded in an LSI is relatively easy when the LSI is a large-scale, complex system. In the case of LSIs embedded in electronic equipments such as consumer products, however, the device configuration is relatively simple, so that the provision of complex debug functions causing a cost increase is not desirable.

In the process steps of designing and manufacturing a system LSI such as an SoC (System On a Chip), the first step is to design architecture and specifications. An RTL design is then made, followed by making a layout design, and then manufacturing the LSIs at factory. Software is then executed on a manufactured LSI to check the operation of the software.

In such process steps of designing and manufacturing an LSI, it is possible to create a virtual software model of the system LSI upon completing the architecture design and specification design at the first step. Accordingly, a software engineer can develop and check software by connecting such software model to a software debugger and by simulating the execution of target software on the software model. The commencement of designing and checking of software immediately upon completing the first step of architecture design and specification design makes it possible to conceal the lengthy time period required for software development in the process steps for LSI design and manufacturing.

When a software debugger is used to check software, trace points generally need to be embedded in a program. Further, print statements or the like may be inserted into the program for debugging purposes. Such modifications to a program, however, cause an actually executed program to be different from the program intended to be debugged in terms of its operating environment and conditions. This makes it unclear what program is really debugged. Namely, an executable object generated for debugging purposes has different operating conditions than an executable object generated by an optimizing compiler for completed products. Such debugging thus fails to debug an actual operation of an actual program.

Accordingly, there is a need to provide a simulation method and simulator that can detect datarace, deadlock, and the like without modifying a program for debugging purposes when program execution is simulated on an LSI software model.
[Patent Document 1] Japanese Patent Application Publication No. 9-101945
[Patent Document 2] Japanese Patent Application Publication No. 2002-297414

### SUMMARY OF THE INVENTION

According to one aspect of an embodiment, a method of simulating software by use of a computer includes executing a program inclusive of a plurality of threads by a hardware model implemented as software on a software simulator, utilizing a monitor function of the simulator to collect information about accesses by monitoring accesses made by the plurality of threads with respect to resources provided in the hardware model, utilizing the monitor function to detect, from the collected information, overlapping accesses made to an identical resource area by two or more of the threads, and utilizing the monitor function to generate a message for warning of the overlapping accesses.

According to another aspect of an embodiment, a record medium having a program embodied therein for causing a computer to simulate software is provided. The program includes instructions causing the computer to perform the steps of executing a program inclusive of a plurality of threads by a hardware model implemented as software on a software simulator, utilizing a monitor function of the simulator to collect information about accesses by monitoring accesses made by the plurality of threads with respect to resources provided in the hardware model, utilizing the monitor function to detect, from the collected information, overlapping accesses made to an identical resource area by two or more of the threads, and utilizing the monitor function to generate a message for warning of the overlapping accesses.

According to another aspect of an embodiment, an apparatus for simulating software includes a memory configured to store a simulator program inclusive of a hardware model implemented as software and a program inclusive of a plurality of threads that is to be executed on a hardware system corresponding to the hardware model, and a computation unit to execute the simulator program stored in the memory to execute the program inclusive of a plurality of threads stored in the memory on the hardware model, wherein the computation unit performs the steps of utilizing a monitor function of the simulator to collect information about accesses by monitoring accesses made by the plurality of threads with respect to resources provided in the hardware model, utilizing the monitor function to detect, from the collected information, overlapping accesses made to an identical resource area by two or more of the threads, and utilizing the monitor function to generate a message for warning of the overlapping accesses.

According to at least one embodiment, a simulator program inclusive of a hardware model implemented as software is provided with the function to detect overlapping accesses made to an identical resource as a monitor function separate from the hardware model. With this arrangement, it is possible to provide a simulation method and simulator that can detect datarace, deadlock, and the like without modifying a program for debugging purposes when program execution is simulated on an LSI software model.

### BRIEF DESCRIPTION OF THE DRAWINGS

Other objects and further features of the present invention will be apparent from the following detailed description when read in conjunction with the accompanying drawings, in which:
Fig. 1 is a drawing showing an example of a configuration in which an SoC simulator is used;
Fig. 2 is a drawing showing an example of hierarchical data that represents relationships between threads;
Fig. 3 is a drawing for explaining the process of generating multiple-access information indicative of multiple accesses;
Fig. 4 is a drawing showing a data structure of multiple-access information generated by a memory monitor;
Fig. 5 is a flowchart showing the entire flow of processes for detecting datarace, deadlock, and the like in a program by use of the configuration shown in Fig. 1;
Fig. 6 is a drawing for explaining the processes performed in step S5 and step S6 shown in Fig. 5;
Fig. 7 is a drawing for explaining the processes performed in step S9 and step S10 shown in Fig. 5;
Fig. 8 is a drawing for explaining a data collecting process performed by the memory monitor;
Fig. 9 is a drawing for explaining a data comparison process;
Fig. 10 is a drawing for explaining differences between the case of an OS being present and the case of an OS being absent;
Fig. 11 is a drawing for explaining a method of identifying a program ID;
Fig. 12 is a drawing showing the supply of various data to an SW/HW monitor;
Fig. 13 is a drawing showing program management data to which a thread is added by a thread generating instruction;
Fig. 14 is a drawing showing the program management data of Fig. 13 that is updated through addition of data;
Fig. 15 is a drawing showing the program management data after the occurrence of multiple accesses due to an access made by another program thread;
Fig. 16 is a drawing showing the program management data from which a thread is removed by a thread removing instruction;
Fig. 17 is a drawing showing the program management data observed when a further thread generating instruction generates a thread in the state shown in Fig. 15;
Fig. 18 is a flowchart showing the detail of the procedure for detecting and warning of positions at which problems may occur due to multiple accesses;
Fig. 19 is a drawing showing the relationships between data processing with respect to a period of interest and the progress of program execution simulation;
Fig. 20 is a drawing showing a new access list and previous access lists;
Fig. 21 is a drawing showing a table indicative of relationships between resources and threads extracted from the data shown in Fig. 20;
Fig. 22 is a drawing showing an example of deadlock occurring between a plurality of threads;
Fig. 23 is a drawing showing the locking of resources by threads and access disapproval;
Fig. 24 is a drawing showing the condition of a memory map in the case shown in Fig. 23;
Fig. 25 is a drawing showing an example of a table indicating relationships between resources and threads;
Fig. 26 is a drawing showing another example of a table indicating relationships between resources and threads;
Fig. 27 is a drawing showing the way the table of Fig. 26 is checked for entries on the same columns;
Fig. 28 is a drawing for explaining datarace;
Fig. 29 is a drawing for explaining the detection of datarace;
Fig. 30 is a drawing for explaining the detection of exclusion control;
Fig. 31 is a drawing for explaining relationships between a memory and a cache in the case of multiple-access occurrence; and
Fig. 32 is a drawing showing the configuration of an apparatus for operating SoC simulator.

### DESCRIPTION OF THE PREFERRED EMBODIMENTS

In the following, embodiments of the present invention will be described with reference to the accompanying drawings.

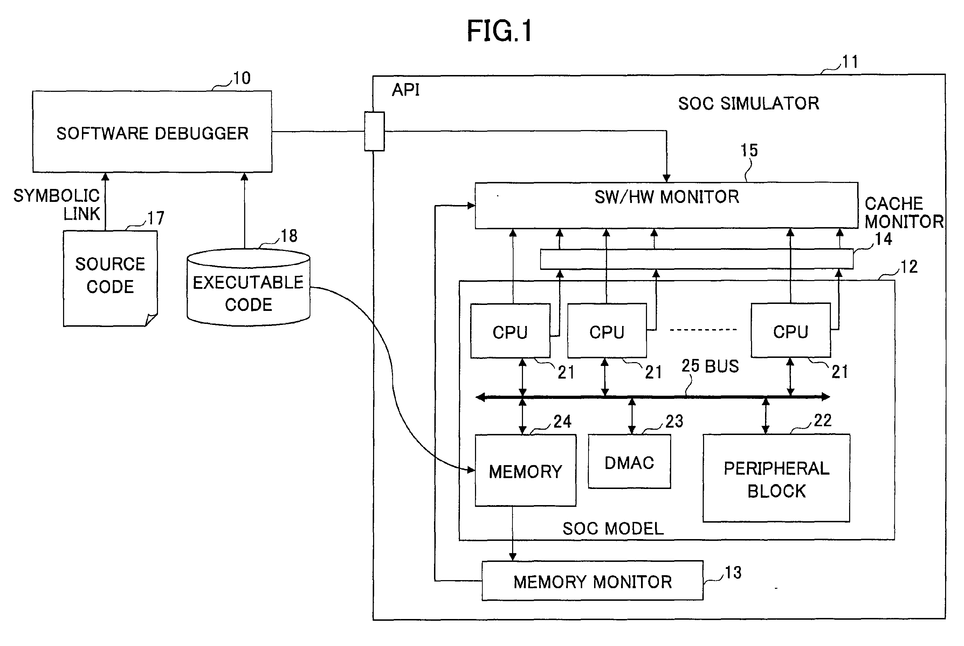

Fig. 1 is a drawing showing an example of a configuration in which an SoC simulator is used. The configuration shown in Fig. 1 includes a software debugger 10 and an SoC simulator 11. The SoC simulator 11 is coupled to the software debugger 10 via an API (Application Program Interface), and includes an SoC model 12, a memory monitor 13, a cache monitor 14, and an SW/HW (software/hardware) monitor 15. The SoC model 12 is a software model of a system LSI. The SoC model 12 includes one or more CPUs 21, a peripheral block 22, a DMAC 23, a memory 24, and a bus 25, all of which are implemented as software. The software debugger 10 and the SoC simulator 11 are executed on a computer.

A source code 17 of a program to be executed on the system LSI implemented as the SoC model 12 is generated and compiled by the computer to produce an executable code 18. The software debugger 10 debugs the program of the source code 17 by referring to the source code 17 and the executable code 18. The executable code 18 is stored in the memory 24 of the SoC model 12, and is executed by the CPUs 21 of the SoC model 12. Namely, program execution by actual CPUs of an actual system LSI is simulated by using the CPUs 21 of the SoC model 12 implemented as software.

The SoC model 12 executes multiple threads in parallel. The SoC model 12 may be configured to provide a single-processor configuration in which a single processor executes multi threads, a multi-processor configuration in which each CPU executes one thread, or a multi-processor configuration in which each CPU executes multiple threads. Since one system LSI executes a plurality of programs, a plurality of source codes 17 and a plurality of executable codes 18 may be provided. One program may generate a plurality of threads, and one program can also be regarded as one thread.

The SoC simulator 11 shown in Fig. 1 simulates program execution by use of the SoC model 12, and also has monitor functions provided separately from the SoC model 12. These monitor functions are used to detect datarace, deadlock, etc. To be specific, the memory monitor 13, the cache monitor 14, and the SW/HW monitor 15 collect various types of information regarding program execution from the SoC model 12. The SW/HW monitor 15 then puts together and organizes the collected information to detect datarace, deadlock, etc.

As preparation, the software debugger 10 notifies the SW/HW monitor 15 of information about one or more programs (i.e, the executable code 18) to be executed by the SoC model 12. This program information includes a program ID uniquely assigned to each program to discriminate a plurality of programs, an address (i.e., call address) of a thread generating function, an address (i.e., call address) of thread synchronization, an address (i.e., call address) of an exclusion control (lock) function, an address (i.e., call address) of an exclusion control (unlock) function, and a priority level (i.e., an order of priority at the time of thread execution) set to each thread.

One thread may generate a plurality of threads. In order to detect which thread has generated a thread of interest, relationships between threads are controlled and managed by using a data structure that provides a hierarchical structure for the relationships between the threads. In order to use hierarchy, the program information may include information regarding inheritance of thread IDs (program IDs).

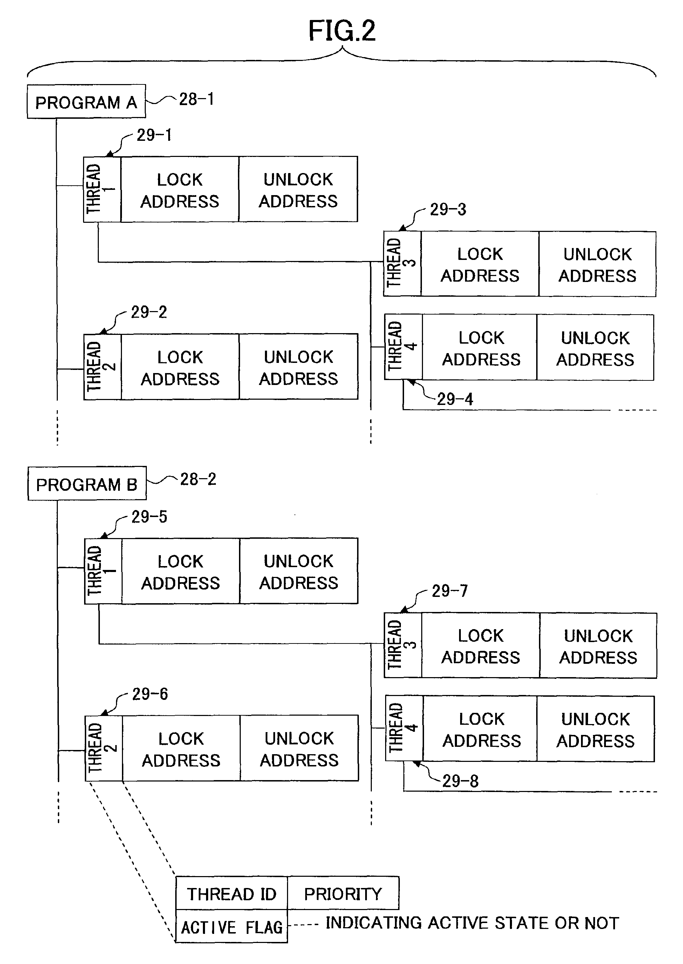

Fig. 2 is a drawing showing an example of hierarchical data that represents relationships between threads. With the progress of program execution, threads are successively generated as shown in Fig. 2. In the example shown in Fig. 2, a program A 28-1 and a program B 28-2 are executed. The program A 28-1 generates a first thread 29-1 and a second thread 29-2. The first thread 29-1 then generates a third thread 29-3 and a fourth thread 29-4. The program B 28-2 generates a first thread 29-5 and a second thread 29-6. The first thread 29-5 then generates a third thread 29-7 and a fourth thread 29-8. Each thread is identified by a unique thread ID, and has a priority level and active flag associated therewith. The active flag indicates whether the thread is in an exclusion state.

The SW/HW monitor 15 receives the program information from the software debugger 10, and also receives an ID of a CPU, a value of a program counter (PC), and a cycle number Cycle of an instruction cycle from the CPUs 21 of the SoC model 12. The PC value (i.e., program counter value) indicates a position on software. The cycle number Cycle indicates a point in time with respect to execution by the SoC simulator 11.

The memory monitor 13 collects information about each memory access occurring with respect to the memory 24 through program execution by the CPUs 21 in order to supply memory access information to the SW/HW monitor 15. The collected information includes an ID of an access-originating CPU 21, a PC value, an access address, an access size, an access type Read/Write, and an access Cycle (i.e., the cycle number of the SoC simulator 11 at which the access has occurred). By the same token, the cache monitor 14 collects information about each access occurring with respect to the cache through program execution by the CPUs 21 in order to supply cache access information to the SW/HW monitor 15. The collected information includes an ID of an access-originating CPU 21, a PC value, an access address, an access size, an access type Read/Write, and an access Cycle.

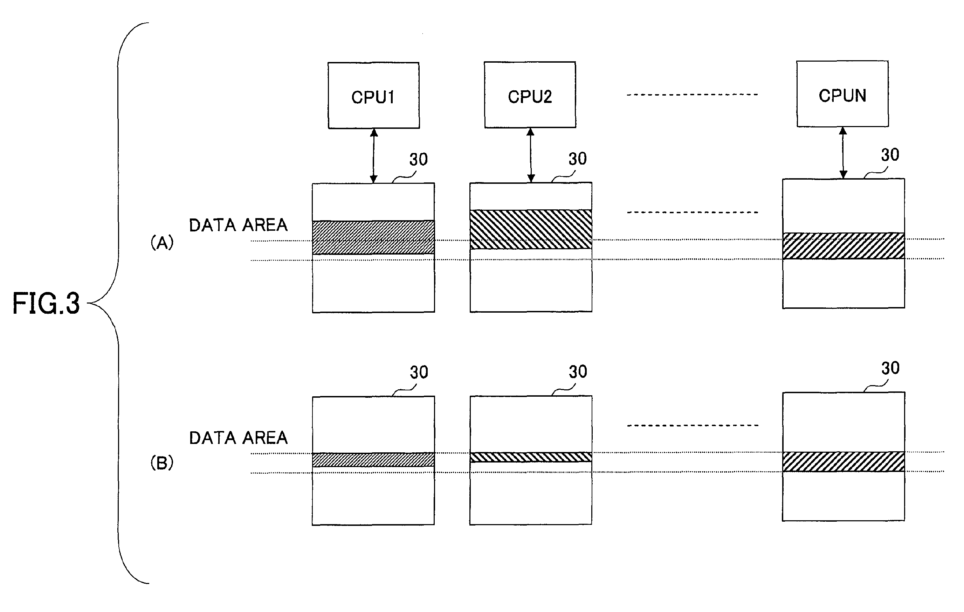

The memory monitor 13 generates multiple-access information indicative of multiple accesses based on the collected information. This collected information includes records indicative of areas accessed by each of the CPUs as shown by hatches in memory maps 30 as shown in Fig. 3A. Namely, an access address and access size included in the collected information indicate an area accessed by a CPU. The memory monitor 13 detects an overlapping portion by comparing the areas accessed by the CPUs so as to identify an area to which multiple accesses are made as shown in Fig. 3B. Further, the CPU_IDs of the CPUs that have contributed to the multiple accesses are identified.

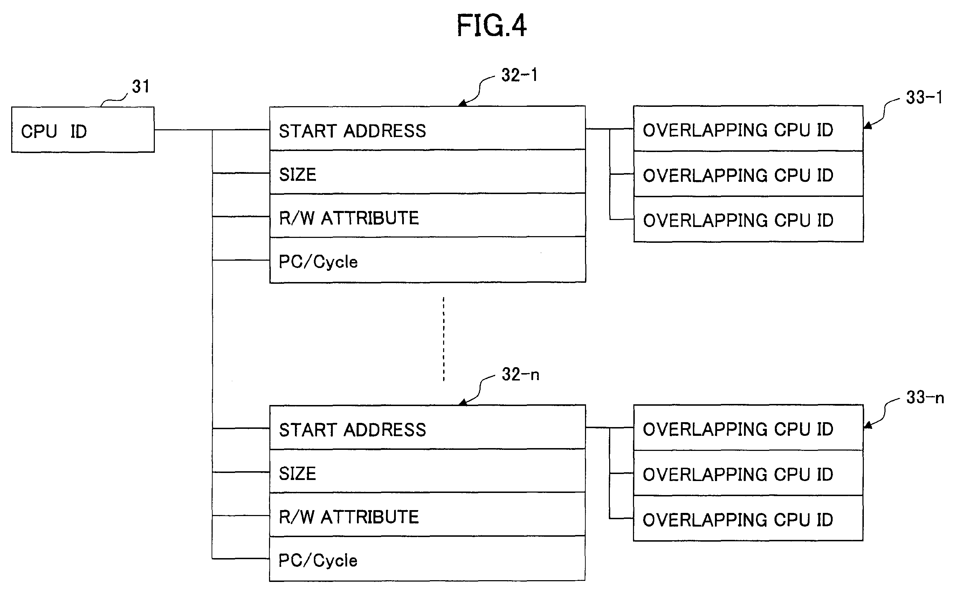

Fig. 4 is a drawing showing a data structure of multiple-access information generated by the memory monitor 13. As shown in Fig. 4, the multiple-access data generated by the memory monitor 13 is configured such that a CPU_ID 31 is associated with access information 32-1 through 32-n regarding accesses performed by the CPU having this CPU_ID 31. Each of the access information units 32-1 through 32-n includes an access address, an access size, an access type Read/Write, a PC (i.e., PC value), and a Cycle. Further, the access information pieces 32-1 through 32-n are associated with CPU_IDs 33-1 through 33-n, respectively, which specify the CPUs that have made overlapping accesses to the relevant accessed area. Fig. 4 shows a data structure only for one CPU_ID 31. It should be noted, however, that the data structure as shown in Fig. 4 is generated separately for each of a plurality of CPU_IDs 31. The multiple-access data generated in this manner is supplied from the memory monitor 13 to the SW/HW monitor 15.

By the same token, the cache monitor 14 generates access information based on the collected information to make it possible to monitor multiple accesses with respect to the cache. The structure of this access information is the same as the data structure shown in Fig. 4. The cache monitor 14 supplies the generated access information to the SW/HW monitor 15.

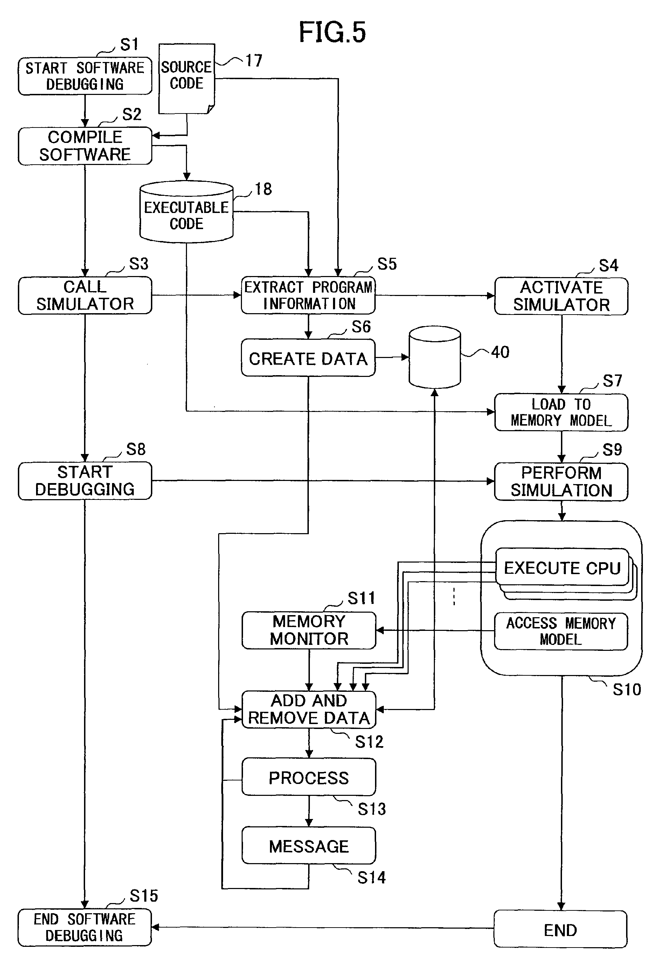

Fig. 5 is a flowchart showing the entire flow of processes for detecting datarace, deadlock, and the like in a program by use of the configuration shown in Fig. 1.

In step S1, the software debugger 10 (see Fig. 1) starts operating. In step S2, the software debugger 10 compiles the source code 17 to generate the executable code (load module) 18.

In step S3, the software debugger 10 calls and activates the SoC simulator 11 (see Fig. 1). Upon the activation of the SoC simulator 11 (step S4), the SW/HW monitor 15 of the SoC simulator 11 extracts necessary information from the program information (i.e., information about the source code 17 and the executable code 18) supplied from the software debugger 10 (step S5). The SW/HW monitor 15 then generates a program management data 40 for monitoring program operations (step S6).

In step S7, the executable code (load module) 18 is loaded to the memory 24 of the SoC model 12 in the SoC simulator 11. In step S8, a software engineer starts debugging by use of the software debugger 10.

In step S8, the software debugger 10 starts simulation by use of the SoC model 12. Namely, the CPUs 21 execute the executable code 18 loaded to the memory 24 to simulate program execution by using the SoC model 12 implemented as software.

In step S10, each of the CPUs 21 executes a program to access the memory 24 as such need arises. When access is made to the memory 24, the memory monitor 13 collects data in step S11. As previously described, the collected information includes an ID of an access-originating CPU 21, a PC value, an access address, an access size, an access type Read/Write, and an access Cycle. The same kind of information is also collected with respect to cache accesses.

As each CPU 21 proceeds with program execution, various events such as a memory access, a cache access, thread generation, thread extinction, and so on occur. In response to such events, data is added to and removed from the program management data 40 so as to update the program management data 40 as appropriate (step S12). In this manner, such data as shown in Fig. 2 as an example is generated and updated as the program management data 40.

In step S13, the program management data 40 is referred to with respect to a predetermined time period (e.g., from Cycle "0" to Cycle "99") of simulated program execution, thereby performing the process to detect datarace, deadlock, and the like caused by multiple accesses. In step S14, a message for warning of the existence of detected dataraces and deadlocks is transmitted to the software debugger 10 (i.e., to the software engineer). This warning may include information for identifying the type of a problem such as an indication of whether the detected problem is datarace or deadlock, and may include information indicative of an address to which the access creating the problem has been made. In step S2, the debugging of software comes to an end.

In the following, each step shown in Fig. 5 will be described.

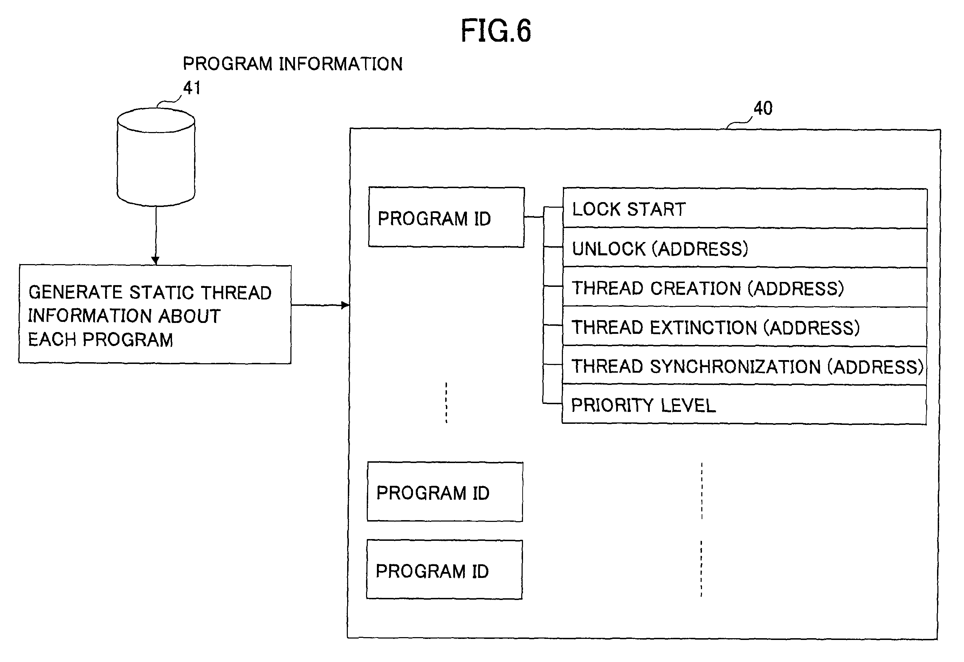

Fig. 6 is a drawing for explaining the processes performed in step S5 and step S6 shown in Fig. 5. As previously described, the SW/HW monitor 15 receives, from the software debugger 10, information about one or more programs to be executed by the SoC model 12. This program information is illustrated as program information 41 in Fig. 6, and includes a program ID uniquely assigned to each program to discriminate a plurality of programs, an address (i.e., call address) of a thread generating function, an address (i.e., call address) of thread synchronization, an address (i.e., call address) of an exclusion control (lock) function, an address (i.e., call address) of an exclusion control (unlock) function, and a priority level (i.e., an order of priority at the time of thread execution) set to each thread.

The SW/HW monitor 15 generates static thread information with respect to each program based on the program information 41. This process corresponds to step S5 and step S6 shown in Fig. 5. Through this process, the SW/HW monitor 15 generates the program management data 40. As illustrated, the program management data 40 includes a lock-start address, an unlock address, a thread generation address, a thread extinction address, a thread synchronizing address, and a priority level with respect to each program ID.

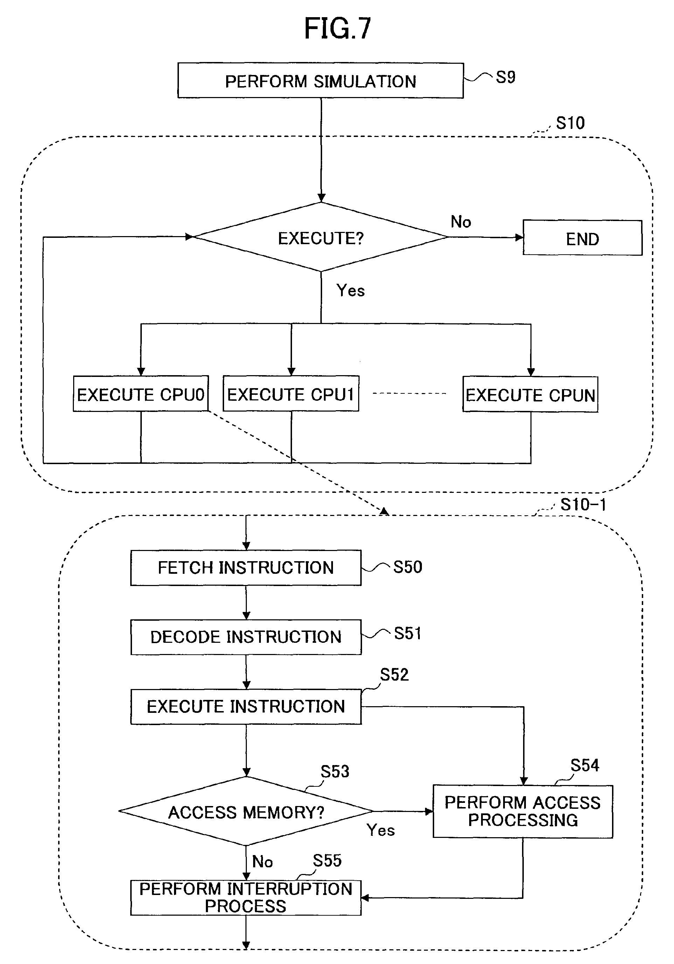

Fig. 7 is a drawing for explaining the processes performed in step S9 and step S10 shown in Fig. 5. Upon performing simulation by the SoC simulator 11 using SoC model 12 in step S9, each CPU 21 (i.e., CPU0 through CPUN shown in Fig. 7) starts executing a program in step S10. Program execution by CPU0 is illustrated as step S10-1. Program execution is also performed similarly with respect to other CPU2 through CPUN.

In step S10-1 showing program execution by CPU0, an instruction is fetched in step S50. Namely, an instruction of the program to be executed is fetched from the memory 24 to CPU0. In step S51, the fetched instruction is decoded. In step S52, the instruction is executed based on the decode results.

In step S53, a check is made as to whether the executed instruction makes memory access. If there is a memory access, access processing is performed in step S54. In this access processing, the value of the program counter PC of CPU0 is used. If no memory access is made, the procedure goes to step S55. After the access processing performed in step S54, also, the procedure goes to step S55. In step S55, an interruption process is performed. The procedure then goes back to the process loop shown as step S10 in Fig. 7, in which CPU0 executes the instructions of the program one after another. The access processing performed in step S54 as described above corresponds to the data collecting process by the memory monitor 13 (and the data collecting process by the cache monitor 14) performed in step S11 shown in Fig. 5.

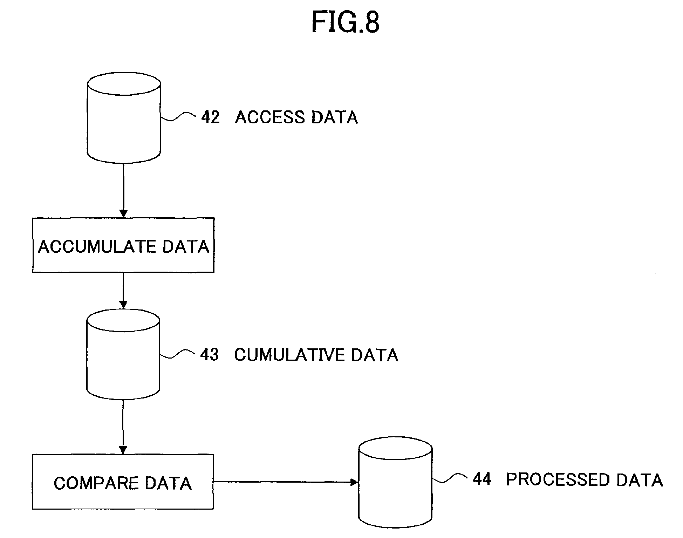

Fig. 8 is a drawing for explaining the data collecting process performed by the memory monitor 13. As previously described, the memory monitor 13 collects information about each memory access occurring with respect to the memory 24 through program execution by the CPUs 21. The collected information includes an ID of an access-originating CPU 21, a PC value, an access address, an access size, an access type Read/Write, and a Cycle. In Fig. 8, information about a single memory access is shown as access data 42. The access data 42 about a single memory access is successively added to cumulative data 43 that stores accumulated access data regarding past memory accesses. The memory monitor 13 performs the data comparison process as described in connection with Fig. 3 with respect to the cumulative data 43, thereby obtaining processed data 44. The processed data 44 is the same as the multiple-access data shown in Fig. 4.

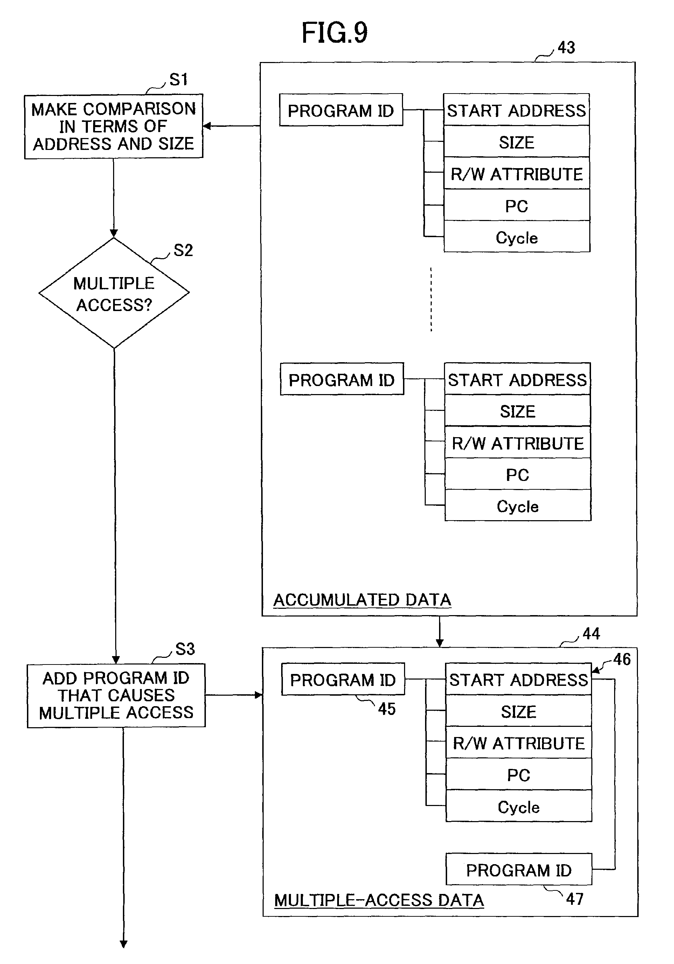

Fig. 9 is a drawing for explaining the data comparison process. As shown in Fig. 9, the start address and size of access recorded in the cumulative data 43 is compared between accesses (step S1). This serves to check whether there are multiple accesses (step S2). With respect to an access for which multiple accesses have been found, program IDs causing multiple accesses are added (step S3). As a result, the multiple-access data 44 is obtained as shown in Fig. 9.

A process similar to the process performed by the memory monitor 13 as described above is also performed by the cache monitor 14 with respect to cache accesses. Namely, a data collecting process similar to the data collecting process performed by the memory monitor 13 shown in Fig. 8 is performed by the cache monitor 14, and a data comparison process similar to the data comparison process performed by the memory monitor 13 shown in Fig. 9 is performed by the cache monitor 14.

In the multiple-access data 44 shown in Fig. 9, a program ID 45 is associated with access information 46 regarding an access made by the program having this program ID, and, also, a program ID 47 of another program that has made an overlapping access to the area accessed by this access is associated with the access information 46. It should be noted that the multiple-access data shown in Fig. 4 uses a CPU_ID in place of a program ID. This is because it is possible to identify a program that has made an access of interest by monitoring CPU_IDs in the case in which no OS (operating system) is used. In the case in which no OS is used, one program is fixedly assigned to one CPU.

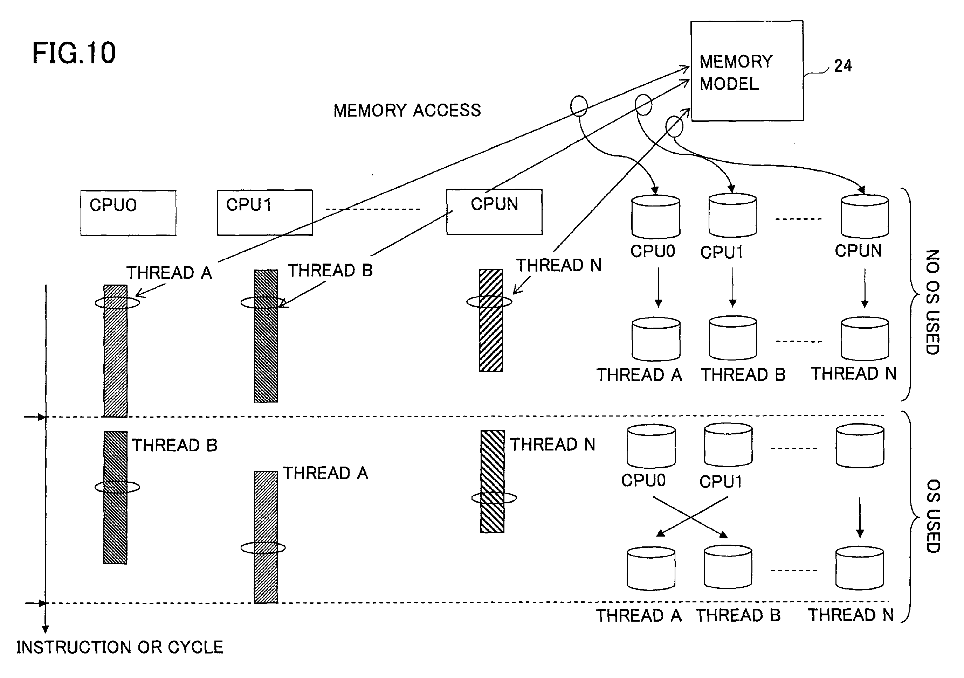

Fig. 10 is a drawing for explaining differences between the case of an OS being present and the case of an OS being absent. In the case of an OS being absent, it is determined which CPU executes which program. When CPU0 executes a program A, for example, all threads A of the program A are going to be performed by CPU0. When monitoring accesses made to the memory 24, thus, it is possible to determine which program has made an access of interest by checking only CPU_IDs.

In the case of an OS being present, on the other hand, the OS will determine which CPU executes which thread at the time of thread execution. Even when CPU0 has been executing a program A, for example, it is not guaranteed that all threads A of the program A are going to be performed by CPU0. Some thread A may be performed by CPU1. When monitoring accesses made to the memory 24, thus, it is not possible to determine which program (thread) has made an access of interest by checking only CPU_IDs.

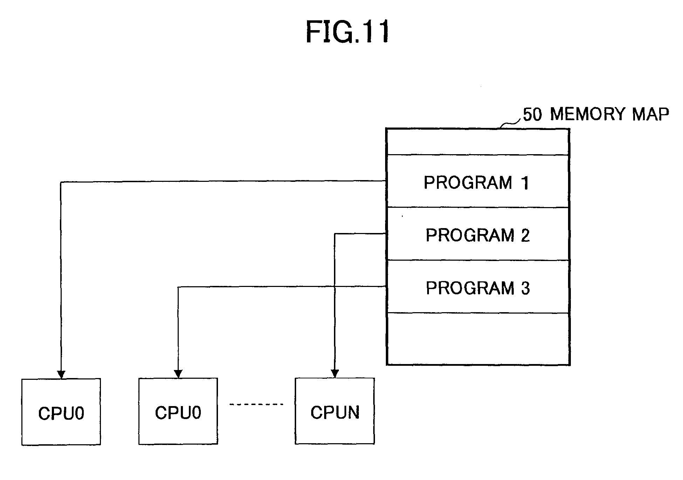

Fig. 11 is a drawing for explaining a method of identifying a program ID. As shown in Fig. 11, each CPU executes a respective program When CPU0 fetches an instruction by accessing an area in which Program 1 is stored on a memory map 50, i.e., when the value of the program counter PC of CPU0 indicates an address within the area in which Program 1 is stored on the memory map 50, it is possible to determine that the program being executed by the CPU0 should be Program 1. In this manner, a program ID can be identified based on the value of PC.

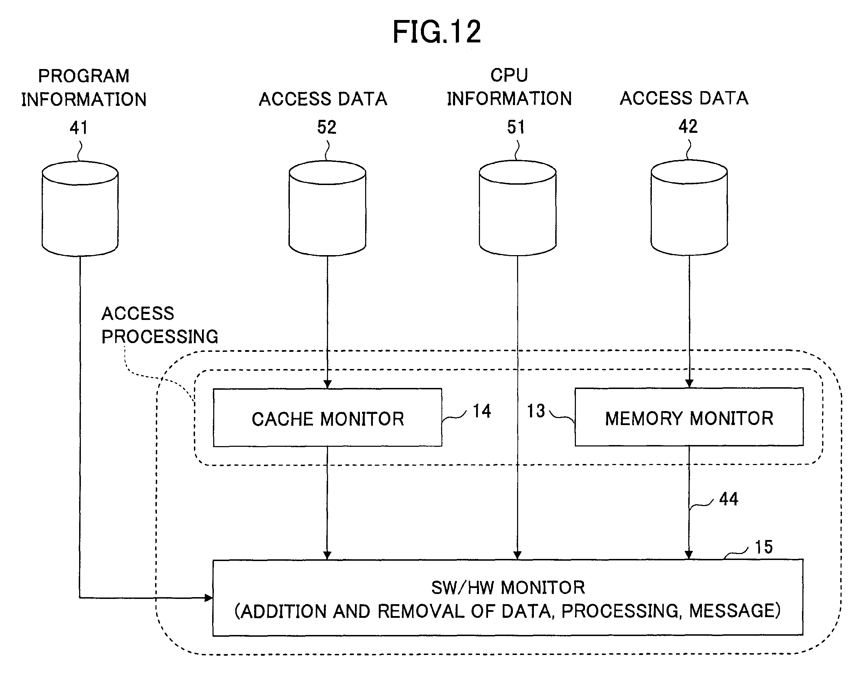

Fig. 12 is a drawing showing the supply of various data to the SW/HW monitor 15. The program information 41 is supplied from the software debugger 10 to the SW/HW monitor 15. The SW/HW monitor 15 receives an ID of a CPU, a value of a program counter (PC), and a cycle number Cycle of an instruction cycle as CPU information 51 from the CPUs 21 of the SoC model 12. As previously described, further, the access data 42 is processed through access processing by the memory monitor 13, and is supplied as the multiple-access data 44 to the SW/HW monitor 15. Likewise, access data 52 regarding cache accesses is processed through access processing by the cache monitor 14, and is supplied as multiple-access data to the SW/HW monitor 15. Based on these supplied data, the SW/HW monitor 15 performs updating processes (i.e., adding and removing data) with respect to the program management data 40.

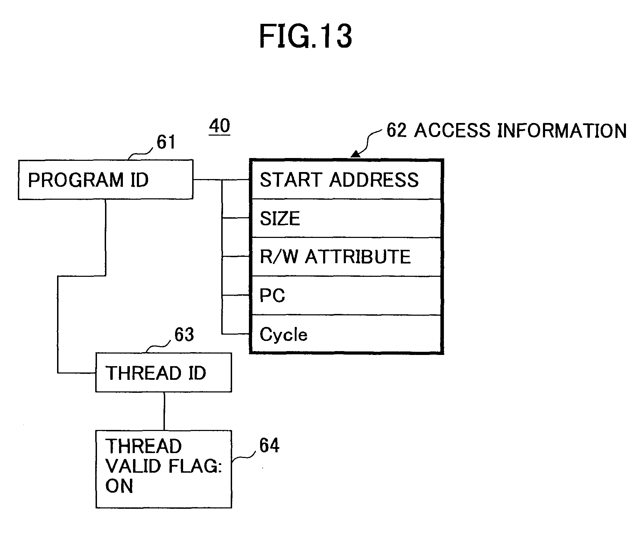

In the following, addition and removal of data performed in step S12 shown in Fig. 5 will be described. Fig. 13 is a drawing showing the program management data 40 to which a thread is added by a thread generating instruction.

During program execution by a CPU as shown in step S10 of Fig. 5 and Fig. 7, the CPU fetches and executes an instruction. When this instruction is an instruction for generating a thread, a thread ID 63 is added to the program management data 40 as shown in Fig. 13. In the program management data 40, a program ID 61 is associated with one or more access information pieces 62 regarding accesses made by the corresponding program. The thread ID 63 of the generated thread is further associated with the program ID 61. The thread ID 63 is an ID assigned by an OS in the case of OS being used. In the case of no OS is used, the thread ID 63 may be any ID.

The thread ID 63 is associated with a thread valid flag 64, the value of which is set to "ON". The value of the thread valid flag 64 is set to "OFF" when this thread is removed. Although not illustrated in Fig. 13, the program management data 40 includes data indicative of a lock-start address, an unlock address, a thread generation address, a thread extinction address, a thread synchronizing address, and a priority level with respect to each program ID as shown in Fig. 6.

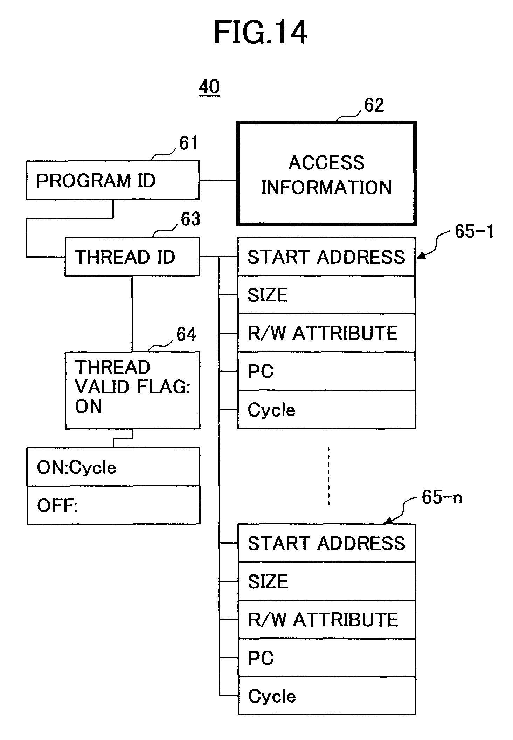

Fig. 14 is a drawing showing the program management data 40 of Fig. 13 that is updated through addition of data. In Fig. 14, the thread corresponding to the thread ID 63 makes a plurality of memory accesses, resulting in a plurality of access information pieces 65-1 through 65-n being associated with the thread ID 63. It should be noted that the access information 62 associated with the program ID 61 are omitted from the illustration in Fig. 14. As shown in Fig. 14, the time at which the thread valid flag 64 is set to "ON" is recorded as Cycle. In this manner, the program management data 40 includes information regarding accesses that are put together on a thread-ID-specific basis, thereby organizing access information in units of threads.

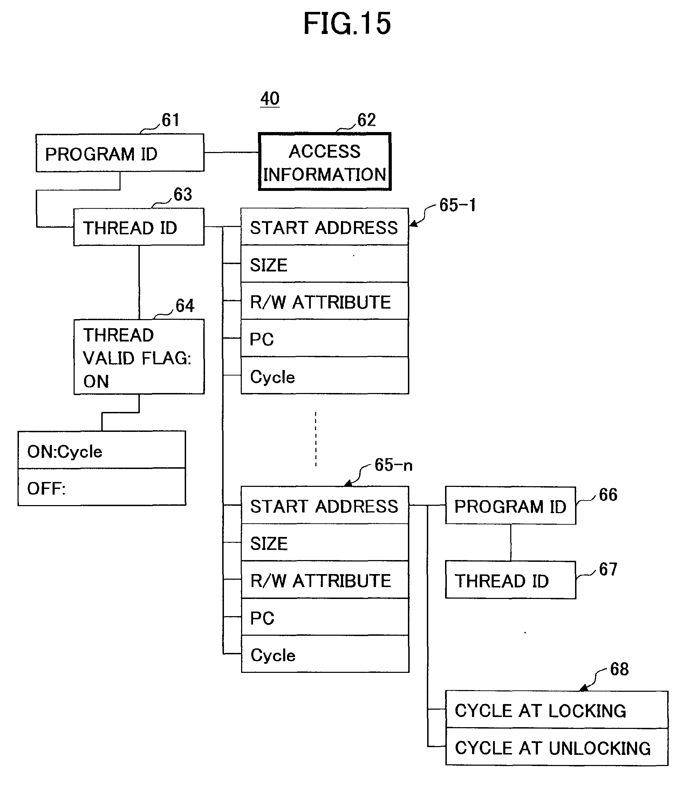

Fig. 15 is a drawing showing the program management data 40 after the occurrence of multiple accesses due to an access made by another program thread. In this example, a thread having a thread ID 67 belonging to a program having a program ID 66 accesses the resource corresponding to the access information 65-n. In this case, the thread of the thread ID 67 accesses the resource while the thread of the thread ID 63 keeps a lock on this resource corresponding to the access information 65-n.

In the program management data 40, further, the cycle (Cycle) at the time of locking and the cycle at the time of unlocking are recorded as lock data 68. During program execution by a CPU as shown in step S10 of Fig. 5 and Fig. 7, the CPU fetches and executes an instruction. The cycle at the time of execution of this instruction is recorded as a lock cycle when this instruction is a locking instruction. The cycle at the time of execution of this instruction is recorded as an unlock cycle when this instruction is an unlocking instruction.

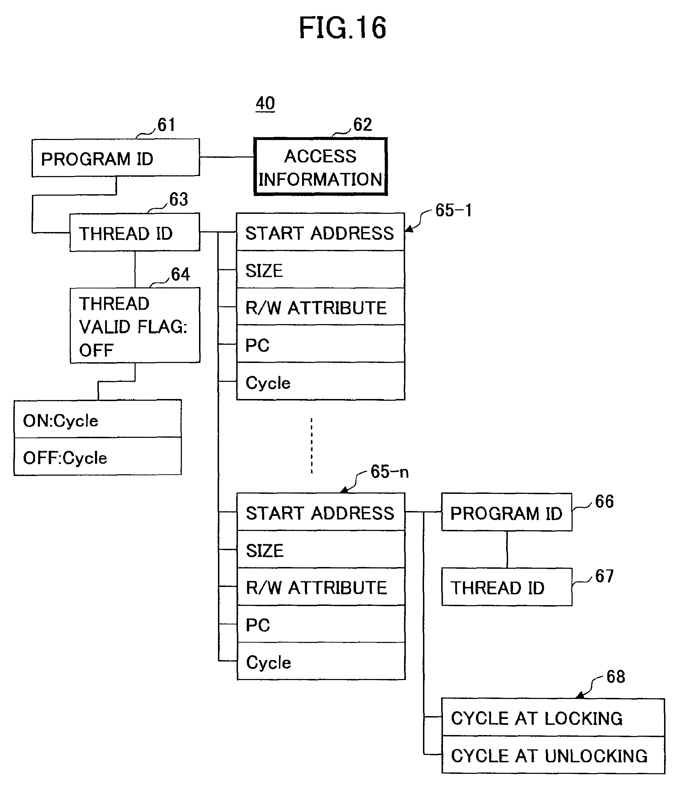

Fig. 16 is a drawing showing the program management data 40 from which a thread is removed by a thread removing instruction.

During program execution by a CPU as shown in step S10 of Fig. 5 and Fig. 7, the CPU fetches and executes an instruction. When this instruction is an instruction for removing a thread, the value of the thread valid flag 64 of the relevant thread ID 63 is set to "OFF" as shown in Fig. 16. Further, the time at which the thread valid flag 64 is set to "OFF" is recorded by use of a Cycle value.

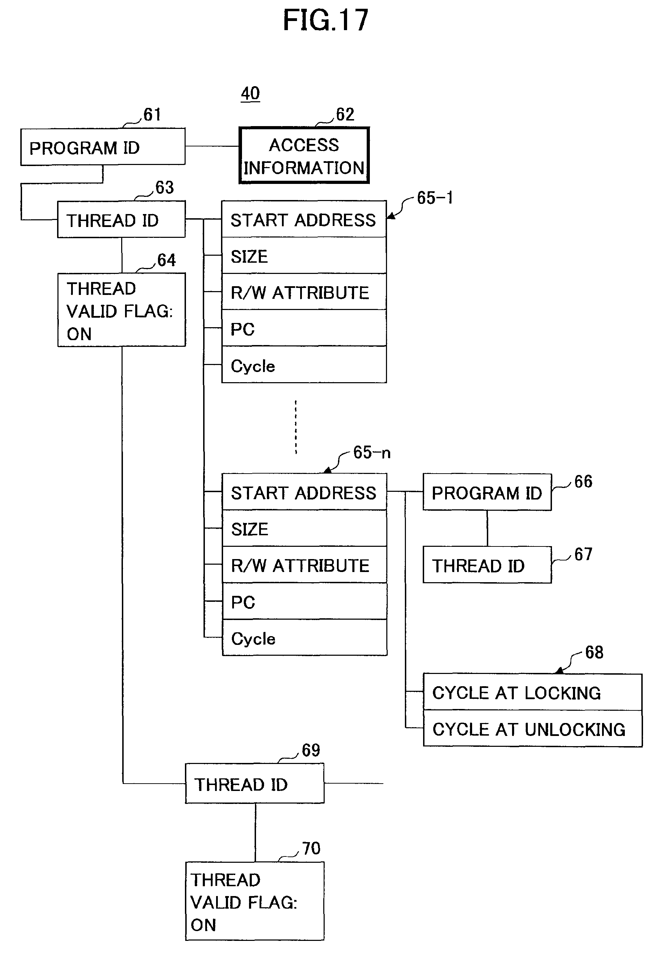

Fig. 17 is a drawing showing the program management data 40 observed when a further thread generating instruction generates a thread in the state shown in Fig. 15.

During program execution by a CPU as shown in step S10 of Fig. 5 and Fig. 7, the CPU may fetch and execute an instruction belonging to the thread of the thread ID 63. This instruction may be an instruction for generating a thread. In such a case, a thread ID 69 is added to the thread ID 63 as a thread (i.e., a thread at a lower hierarchy level than the thread ID 63) that is generated by the thread ID 63 in the program management data 40 as shown in Fig. 17. The thread ID 69 is associated with a thread valid flag 70, the value of which is set to "ON". The value of the thread valid flag 70 is set to "OFF" when this thread is removed.

In the following, the processes performed in steps S13 and S14 shown in Fig. 5 will be described. In these processes, datarace and deadlock caused by multiple accesses are detected, and a message for warning of the detected problems is transmitted.

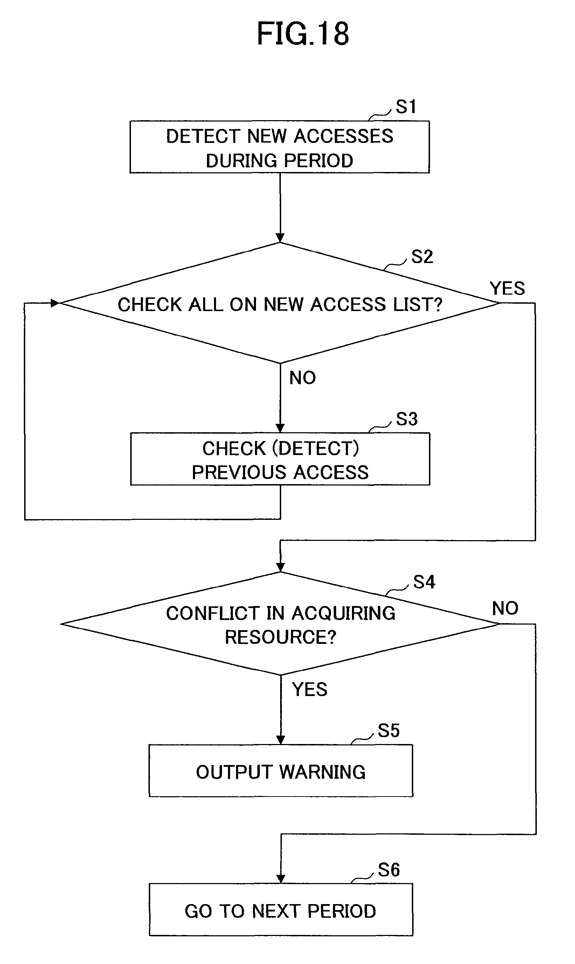

Fig. 18 is a flowchart showing the detail of the procedure for detecting and warning of positions at which problems may occur due to multiple accesses. In step S1, new accesses made during a period of interest are detected. The period of interest refers to one of a plurality of time periods into which the entire period of simulation of the SoC model 12 by the SoC simulator 11 is divided according to cycle numbers Cycle. For example, the entire simulation period may be divided in units of 100 cycles, providing a first period from Cycle 0 to Cycle 99, a second period from Cycle 100 to Cycle 199, a third period from Cycle 200 to Cycle 299, and so on.

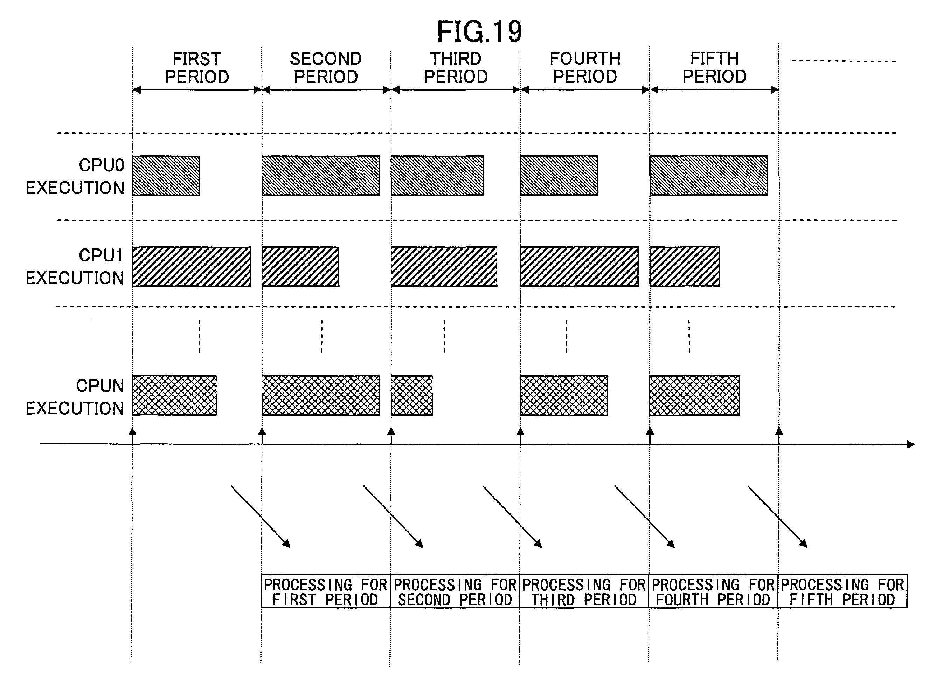

Fig. 19 is a drawing showing the relationships between data processing with respect to a period of interest and the progress of program execution simulation. As shown in Fig. 19, each CPU executes a program in each of the periods into which the simulation period is divided in units of 100 cycles. In the example shown in Fig. 19, program execution by each CPU is synchronized at the start of each period. Through the process performed in step S12 shown in Fig. 5, the program management data 40 is accumulated as cycles proceed. The program management data 40 obtained for a given period is checked by a multiple access detecting process performed in the next period. Namely, as shown in Fig. 19, the data obtained from the first period is processed in the second period after the end of the first period. Similarly, the data obtained from the second period is processed in the third period after the end of the second period. In general, the data obtained from the N-th period is processed in the N+1-th period after the end of the N-th period. In other words, the program management data 40 accumulated in the N-th period is checked to perform the multiple access detecting process and the like in the N+1-th period. In so doing, program execution simulation of the SoC model 12 by the SoC simulator 11 is concurrently performed in the N+1-th period.

In step S1 of Fig. 18, the SW/HW monitor 15 detects new accesses occurring in a period of interest to list up all the accesses made during this period. In step S2, a check is made as to whether the SW/HW monitor 15 has checked all the entries on the new access list. In step S3, the SW/HW monitor 15 checks the new access list and previous access lists to generate a table showing the relationships between resources and threads.

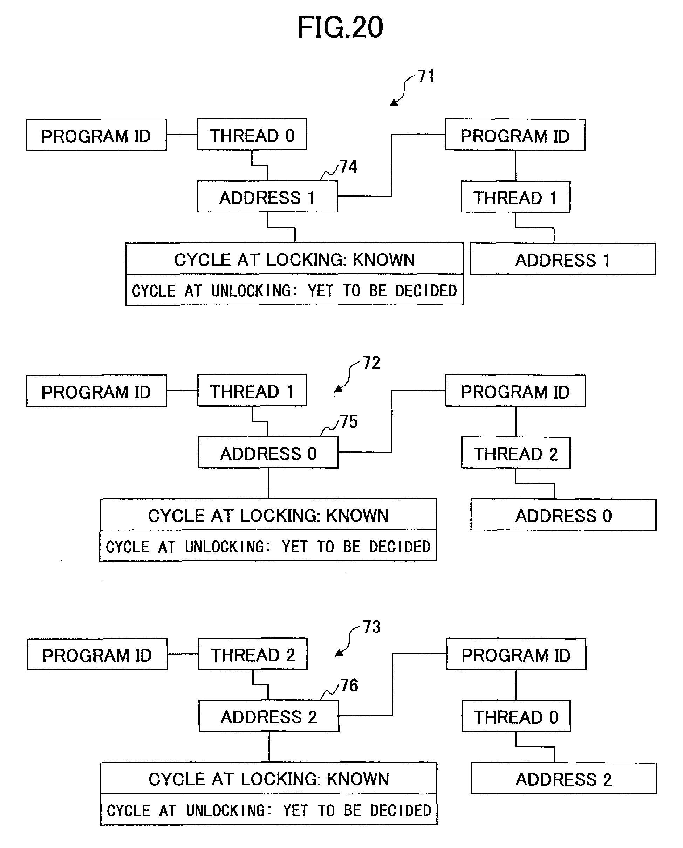

Fig. 20 is a drawing showing a new access list and previous access lists. In Fig. 20, lists 71 through 73, for example, are accumulated as access lists. Each list is substantially the same as the program management data 40 shown in Fig. 13 through Fig. 17. Access information pieces 74 through 76 are provided for respective accesses, and program threads that have accessed these addresses are specified. Such lists may be extracted from the program management data 40. Alternatively, such lists may simply be regarded as a portion of the program management data 40 on which attention is focused.

In the case of list 71, thread 0 and thread 1 have accessed address 1, and thread 0 has locked address 1, with thread 1 waiting for the release of address 1. Likewise, in the case of list 72, thread 1 and thread 2 have accessed address 0, and thread 1 has locked address 0, with thread 2 waiting for the release of address 0. In step S3 of Fig. 18, these lists are checked to generate a table that shows the relationships between resources and threads for the purpose of detecting deadlock and the like.

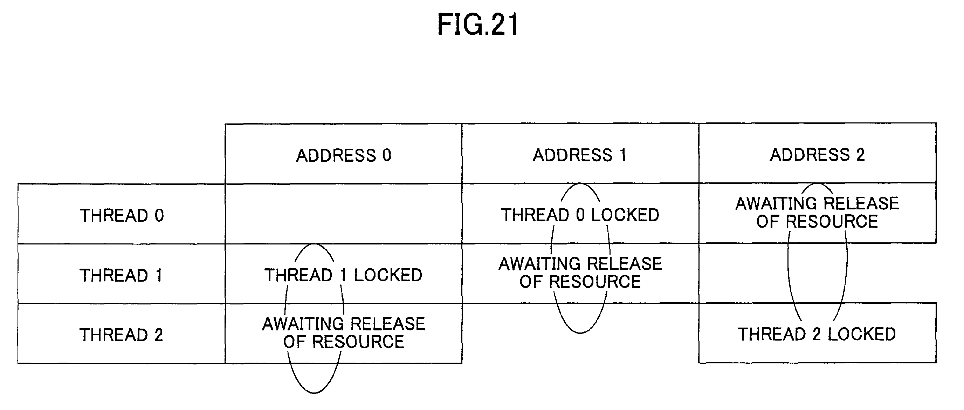

Fig. 21 is a drawing showing a table indicative of the relationships between resources and threads extracted from the data shown in Fig. 20. The table of Fig. 21 indicates that thread 1 has locked address 0, thread 2 waiting for release of address 0, thread 0 having locked address 1, thread 1 waiting for release of address 1, thread 2 having locked address 3, and thread 0 waiting for release of address 3.

Turning to Fig. 18 again, in step S4, a check is made as to whether there is a conflict in acquiring resources. This is performed by checking entries in the same column of the table as shown in Fig. 21 to determine whether both the locking status and the release awaiting status are present with respect to each of the resources (i.e., address 0 through address 2 in the example shown in Fig. 21). In the example shown in Fig. 21, the three threads have locked the three resources, and are waiting for the release of these resources. Based on this observation, the possibility of deadlock can be detected. If the check in step S4 finds a conflict in acquiring resources, a warning indicative of the possibility of deadlock is transmitted in step S5. As will be described, datarace and the like are also detected in step S4 in addition to deadlock, and a warning is transmitted in step S5 in response to the detection of datarace or the like. If the check in step S4 finds neither conflict in acquiring resources nor datarace or the like, the procedure proceeds to step S6, in which processing for the next period is performed.

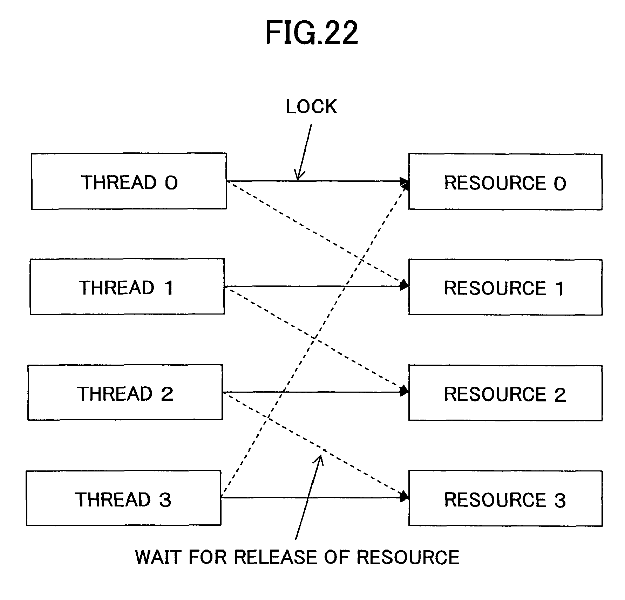

In the following, the detection of deadlock will further be described in detail. Fig. 22 is a drawing showing an example of deadlock occurring between a plurality of threads. In Fig. 22, solid-line arrows represent the acquisition of lock, and dotted-line arrows represent a wait for release. Thread 0 has locked resource 0 and waiting for the release of resource 1. Thread 1 has locked resource 1 and waiting for the release of resource 2. Thread 2 has locked resource 2 and waiting for the release of resource 3. Thread 3 has locked resource 3 and waiting for the release of resource 0. In such a case, a deadlock state occurs in which processing does not proceed if none of the threads releases their locked resources unless the awaited resources are released.

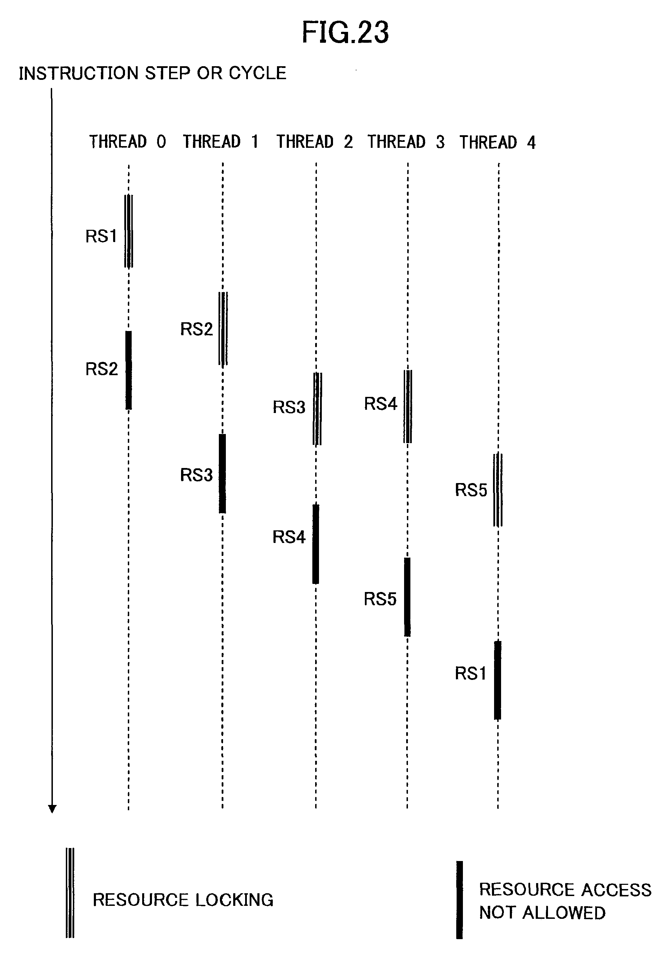

Fig. 23 is a drawing showing the locking of resources by threads and access disapproval. In Fig. 23, thread 0 through thread 4 lock resources RS1 through RS5, respectively, and are denied access to the resources RS2, RS3, RS4, RS5, and RS1, respectively, upon access attempt.

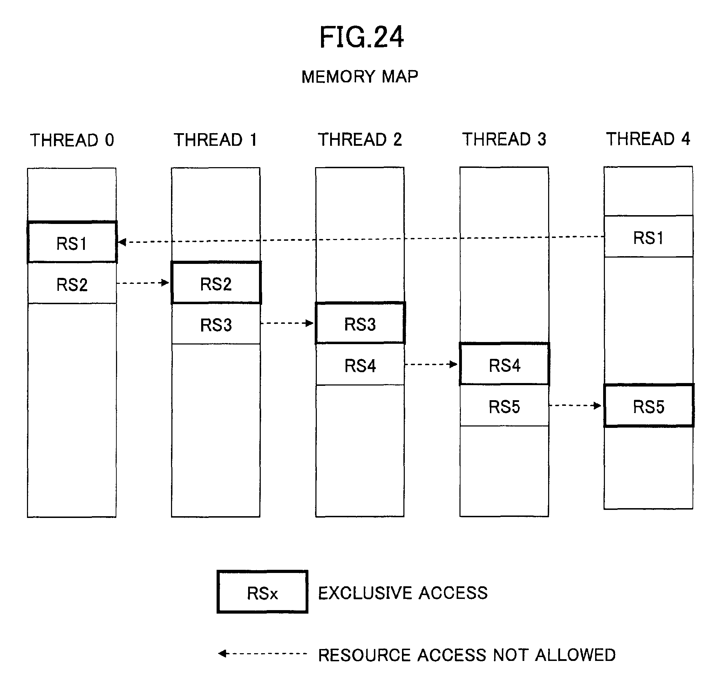

Fig. 24 is a drawing showing the condition of a memory map in the case shown in Fig. 23. The illustrated memory map reflects the situation in which thread 0 through thread 4 lock resources RS1 through RS5, respectively, and are denied access to the resources RS2, RS3, RS4, RS5, and RS1, respectively, upon access attempt.

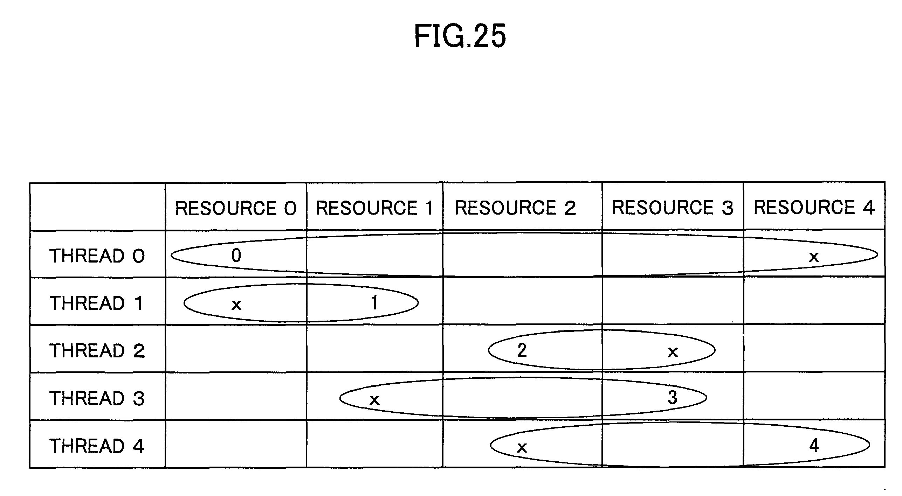

Fig. 25 is a drawing showing an example of a table indicating the relationships between resources and threads. In the example shown in Fig. 25, thread 0 has locked resource 0 and waiting for the release of resource 4, thread 1 having locked resource 1 and waiting for the release of resource 0, thread 2 having locked resource 2 and waiting for the release of resource 3, thread 3 having locked resource 3 and waiting for the release of resource 1, and thread 4 having locked resource 4 and waiting for the release of resource 2. In this case, entries on the same column are checked in the table to determine whether both the locking state and the resource awaiting state are in existence with respect to each resource, revealing that conflicts in acquiring resources are present with respect to all the resources. Accordingly, if none of the threads will release their locked resources unless the awaited resources are released, a deadlock state occurs in which processing does not proceed.

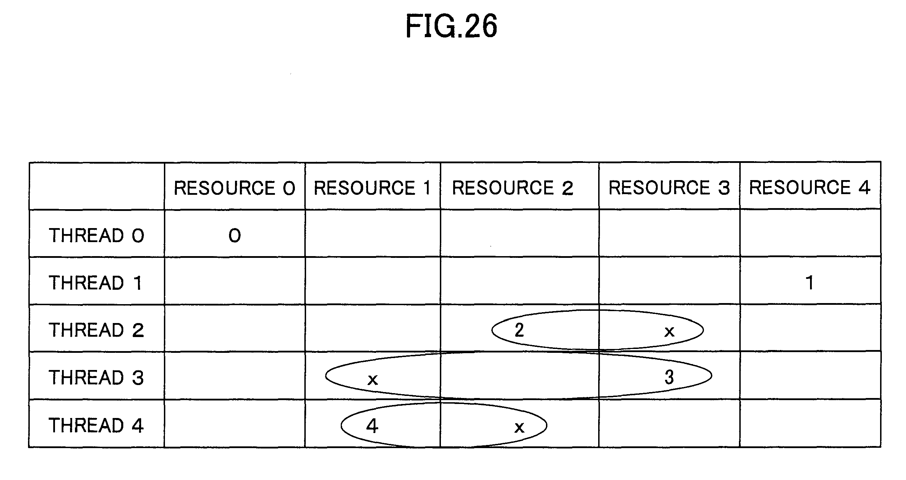

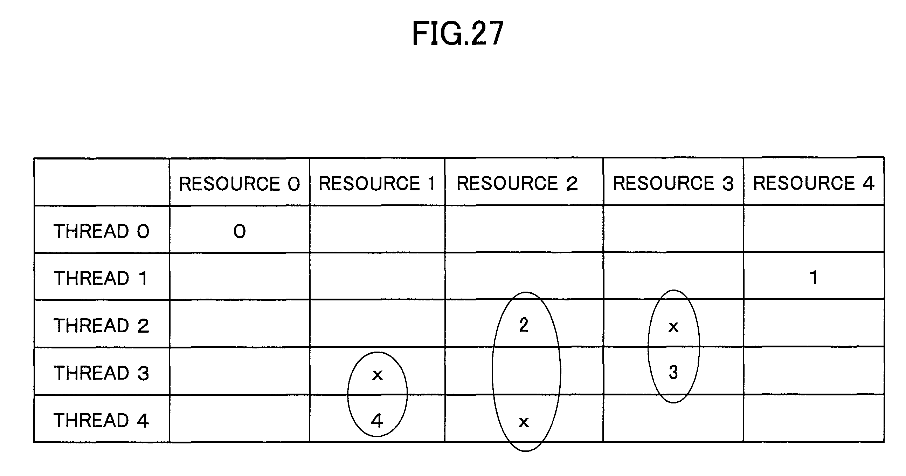

Fig. 26 is a drawing showing another example of a table indicating the relationships between resources and threads. In the example shown in Fig. 26, thread 0 has locked resource 0, thread 1 having locked resource 4, thread 2 having locked resource 2 and waiting for the release of resource 3, thread 3 having locked resource 3 and waiting for the release of resource 1, and thread 4 having locked resource 1 and waiting for the release of resource 2. Fig. 27 is a drawing showing the way the table of Fig. 26 are checked for entries on the same columns. As shown in Fig. 27, entries on the same column are checked in the table to determine whether both the locking state and the resource awaiting state are in existence with respect to each resource, revealing that conflicts in acquiring resources are present with respect to recourse 1, resource 2, and resource 3. Accordingly, if none of the thread 2, thread 3, and thread 4 will release their locked resources unless the awaited resources are released, a deadlock state occurs in which processing does not proceed.

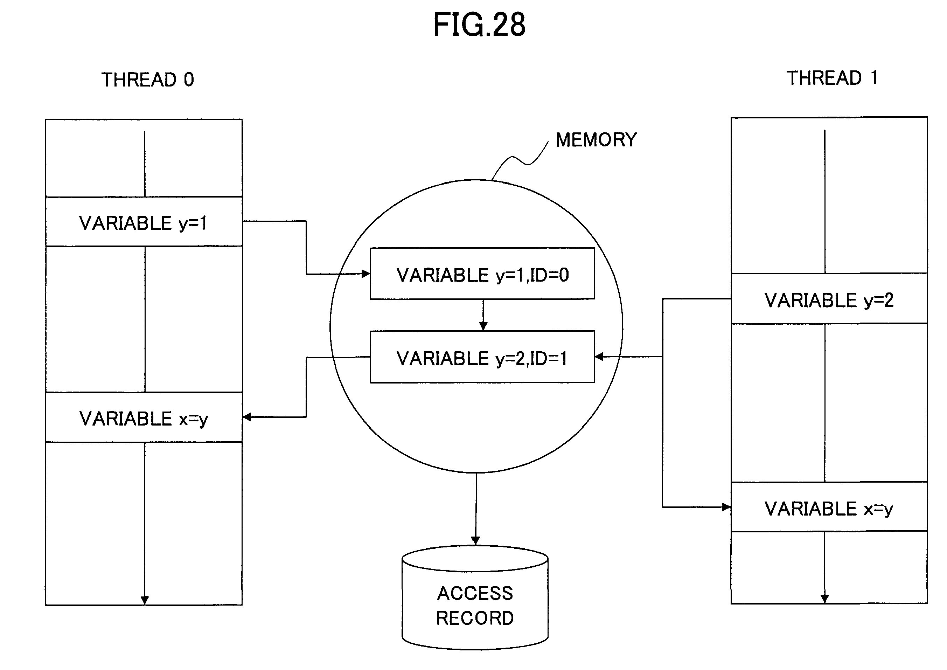

Fig. 28 is a drawing for explaining datarace. In Fig. 28, thread 0 sets "1" to variable y in memory (or cache), and then assign variable y to variable x. Independently of thread 0, thread 1 sets "2" to variable y, and then assign variable y to variable x. In the memory (or cache), variable y is set to "1" by thread 0 (ID=0), and is changed to "2" by thread 1 (ID=1). If this program is intended such that thread 0 assigns variable y with its value being "1" to variable x, such intension is different from the actual operation due to multiple accesses to variable y in the example of Fig. 28. Datarace thus occurs.

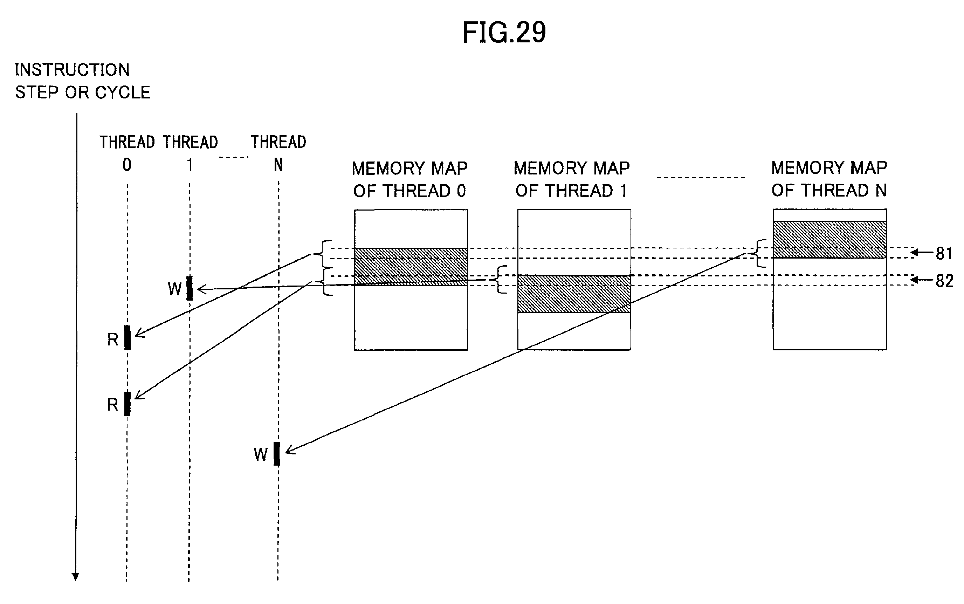

Fig. 29 is a drawing for explaining the detection of datarace. In the example shown in Fig. 29, thread 0 performs a read operation (R) with respect to a memory area 81 and a memory area 82, and thread 1 performs a write operation (W) with respect to the memory area 82, with thread N performing a write operation (W) with respect to the memory area 81. It should be noted that the memory map is controlled separately for each thread. Access to memory is either a write operation W or a read operation R. There are thus four different combinations WR, RW, WW, and RR for multiple accesses to the same memory area. RR does not create data conflict, and is thus not detected as datarace. WR, RW, and WW create data conflict, and should thus be detected as datarace. To be specific, an access list (similar to the one shown in Fig. 20) is generated by extracting accesses by use of the SW/HW monitor 15 as was described in connection with Fig. 18. Multiple accesses corresponding to combinations WR, RW, and WW are then detected in the list, and are then warned of as being possibly datarace.

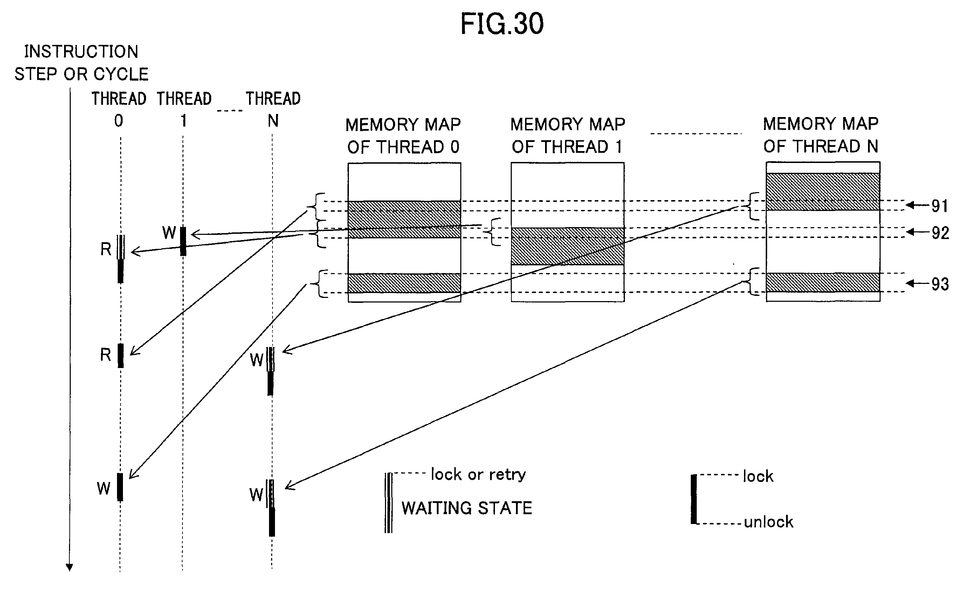

Fig. 30 is a drawing for explaining the detection of exclusion control. In the example shown in Fig. 30, thread 0 attempts to lock a memory area 92 for a read operation (R), and then locks the area after some waiting period, followed by unlocking the area. Thereafter, thread 0 locks and unlocks a memory area 91 for a write operation (R), followed by locking and unlocking a memory area 93 for a write operation (W). Thread 1 locks and unlocks the memory area 92 for a write operation (W). Thread N attempts to lock the memory area 91 for a write operation (W), and then locks the area after some waiting period, followed by unlocking the area. Thereafter, thread N attempts to lock the memory area 93 for a write operation (W), and then locks the area after some waiting period, followed by unlocking the area. It should be noted that the memory map is controlled separately for each thread.

Access to memory is either a write operation W or a read operation R. There are thus four different combinations WR, RW, WW, and RR for multiple accesses to the same memory area. RR does not create data conflict, and is thus not detected as exclusion control. WR, RW, and WW create data conflict, and should thus be detected as exclusion control. To be specific, an access list (similar to the one shown in Fig. 20) is generated by extracting accesses by use of the SW/HW monitor 15 as was described in connection with Fig. 18. Multiple accesses corresponding to combinations WR, RW, and WW are then detected in the list, and are then warned of as being possibly exclusion control. In so doing, the SW/HW monitor 15 sets the active flag to "ON" in response to the calling of a lock function, and sets the active flag to "OFF" in response to the calling of an unlock function. With this arrangement, the area that is accessed by a thread during the "ON" period of an active flag can be detected as an exclusion state.

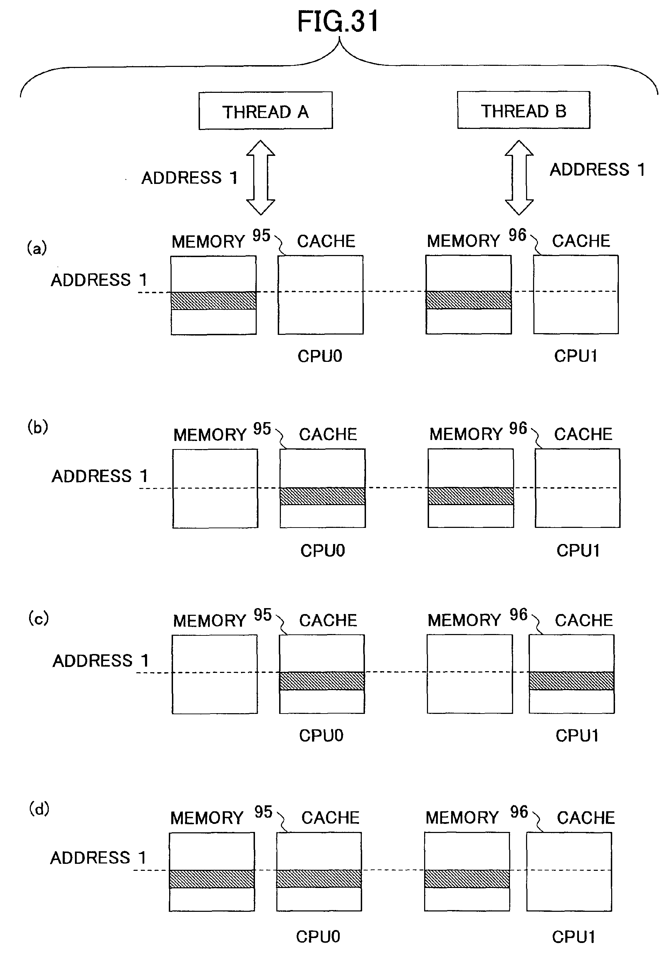

Fig. 31 is a drawing for explaining relationships between a memory and a cache in the case of multiple-access occurrence. When two active threads A and B access the same address (address 1), the situation can be classified into four different patterns, depending on which one of the memory and the cache is accessed.

Fig. 31-(a) shows a case in which thread A accesses the memory, and thread B also accesses the memory. In this case, the occurrence of resource conflict accesses with respect to the memory can be detected. Fig. 31-(b) shows a case in which thread A accesses a cache 95 of CPU0, and thread B accesses the memory. In this case, the occurrence of data discrepancy between the CPU0 cache 95 and the memory can be detected. Fig. 31-(c) shows a case in which thread A accesses a cache 95 of CPU0, and thread B accesses a cache 96 of CPU1. In this case, the fact that accesses are made to the caches of CPUO/CPU1 and no access is made to the memory can be detected. Fig. 31-(d) shows a case in which thread A accesses the cache 95 of CPU0 as well as the memory, and thread B accesses the cache 96 of CPU1. In this case, the data in the CPU0 cache 95 and the data in the memory may be the same or may be different, depending on the circumstances. The data are the same if CPU0 properly updates the memory and the cache. The data are different if CPU1 makes an access around the time at which CPU0 accesses the memory. However, no problem occurs due to multiple accesses despite the above-noted scenario if both the access by CPU0 and the access by CPU1 are read accesses.

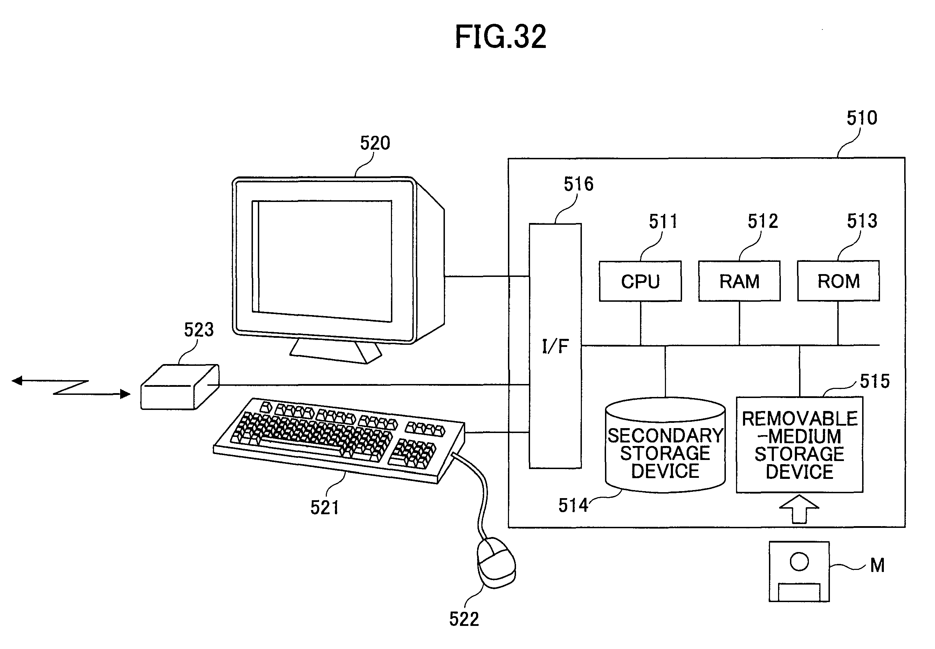

Fig. 32 is a drawing showing the configuration of an apparatus for operating SoC simulator 11.

As shown in Fig. 32, the apparatus for executing SoC simulator 11 is implemented as a computer such as a personal computer, an engineering workstation, or the like. The apparatus of Fig. 32 includes a computer 510, a display apparatus 520 connected to the computer 510, a communication apparatus 523, and an input apparatus. The input apparatus includes a keyboard 521 and a mouse 522. The computer 510 includes a CPU 511, a ROM 513, a secondary storage device 514 such as a hard disk, a removable-medium storage device 515, and an interface 516.

The keyboard 521 and mouse 522 provide user interface, and receive various commands for operating the computer 510 and user responses responding to data requests or the like. The display apparatus 520 displays the results of processing by the computer 510, and further displays various data that makes it possible for the user to communicate with the computer 510. The communication apparatus 523 provides for communication to be conduced with a remote site, and may include a modem, a network interface, or the like.

The SoC simulator 11 and the software debugger 10 are provided as a computer program executable by the computer 510. This computer program is stored in a memory medium M that is mountable to the removable-medium storage device 515. The computer program is loaded to the RAM 512 or to the secondary storage device 514 from the memory medium M through the removable-medium storage device 515. Alternatively, the computer program may be stored in a remote memory medium (not shown), and is loaded to the RAM 512 or to the secondary storage device 514 from the remote memory medium through the communication apparatus 523 and the interface 516.

Upon user instruction for program execution entered through the keyboard 521 and/or the mouse 522, the CPU 511 loads the program to the RAM 512 from the memory medium M, the remote memory medium, or the secondary storage device 514. The CPU 511 executes the program loaded to the RAM 512 by use of an available memory space of the RAM 512 as a work area, and continues processing while communicating with the user as such a need arises. The ROM 513 stores therein control programs for the purpose of controlling basic operations of the computer 510.

By executing the computer program as described above, the computer 510 executes the software debugger 10 and the SoC simulator 11 as described in the embodiments.

Further, the present invention is not limited to these embodiments, but various variations and modifications may be made without departing from the scope of the present invention.

For example, accesses to the same area have been described by taking as an example an access to a memory or to a cache. However, an object for which deadlock or the like is detected is not limited to a memory or cache, but can be any object that is accessible from CPU. Access to I/O resources such as the peripheral block 22 shown in Fig. 1, for example, may also be subjected to detection.

## Claims

1. A method of simulating software by use of a computer, **characterized by** comprising:
executing a program inclusive of a plurality of threads by a hardware model implemented as software on a software simulator;
utilizing a monitor function of the simulator to collect information about accesses by monitoring accesses made by the plurality of threads with respect to resources provided in the hardware model;
utilizing the monitor function to detect, from the collected information, overlapping accesses made to an identical resource area by two or more of the threads; and
utilizing the monitor function to generate a message for warning of the overlapping accesses.

2. The method as claimed in claim 1, wherein the collected information includes an ID of an access-originating CPU, a value of a program counter of the CPU, an access address, an access size, an access type indicative of either read or write, and a cycle number of the simulator corresponding to a time of occurrence of an access.

3. The method as claimed in claim 2, wherein the step of detecting overlapping accesses detects the overlapping accesses by comparing the access address and the access size between accesses made by the plurality of threads.

4. The method as claimed in claim 1, further comprising organizing information about the detected overlapping accesses on a thread-specific basis.

5. The method as claimed in claim 4, further comprising:
creating a table indicative of relationship between the threads and the resources based on the information about the detected overlapping accesses organized on a thread-specific basis; and
detecting possible deadlock based on the table,
wherein the generating of the message generates a message for warning of the detected possible deadlock.

6. The method as claimed in claim 4, further comprising the step of detecting possible datarace based on the information about the detected overlapping accesses organized on a thread-specific basis, depending on whether the overlapping accesses are read access or write access, wherein the generating of the message generates a message for warning of the detected possible datarace.

7. The method as claimed in claim 1, wherein the generating of the message generates the message by including therein information indicative of a type of a problem caused by the overlapping accesses and information indicative of an address accessed by the overlapping accesses.

8. The method as claimed in claim 1, wherein an operating period of the hardware model is divided into a plurality of periods, and the information about accesses generated in a given one of the periods is collected in the given one of the periods, followed by generating the message in a period next following the given one of the period based on the collected information.

9. A record medium having a program embodied therein for causing a computer to simulate software, the program comprising instructions causing the computer to perform the steps of:
executing a program inclusive of a plurality of threads by a hardware model implemented as software on a software simulator;
utilizing a monitor function of the simulator to collect information about accesses by monitoring accesses made by the plurality of threads with respect to resources provided in the hardware model;
utilizing the monitor function to detect, from the collected information, overlapping accesses made to an identical resource area by two or more of the threads; and
utilizing the monitor function to generate a message for warning of the overlapping accesses.

10. An apparatus for simulating software, **characterized by** comprising:
a memory configured to store a simulator program inclusive of a hardware model implemented as software and a program inclusive of a plurality of threads that is to be executed on a hardware system corresponding to the hardware model; and
a computation unit to execute the simulator program stored in the memory to execute the program inclusive of a plurality of threads stored in the memory on the hardware model,
wherein the computation unit performs the steps of:
utilizing a monitor function of the simulator to collect information about accesses by monitoring accesses made by the plurality of threads with respect to resources provided in the hardware model;
utilizing the monitor function to detect, from the collected information, overlapping accesses made to an identical resource area by two or more of the threads; and
utilizing the monitor function to generate a message for warning of the overlapping accesses.
